(19) **Europäisches Patentamt**
**European Patent Office**
**Office européen des brevets**

(11) **EP 4 510 513 A1**

(12) **EUROPEAN PATENT APPLICATION**
published in accordance with Art. 153(4) EPC

(43) Date of publication:
**19.02.2025 Bulletin 2025/08**

(21) Application number: **23795095.1**

(22) Date of filing: **18.04.2023**

(51) International Patent Classification (IPC):
**H04L 27/26** *(2006.01)*

(52) Cooperative Patent Classification (CPC):
**H04L 27/26**

(86) International application number:
**PCT/CN2023/088855**

(87) International publication number:
**WO 2023/207662 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210469011**

(71) Applicant: **Huawei Technologies Co., Ltd.
Shenzhen, Guangdong 518129 (CN)**

(72) Inventors:
• **GONG, Zhengwei
Shenzhen, Guangdong 518129 (CN)**
• **PENG, Yaqiu
Shenzhen, Guangdong 518129 (CN)**
• **QI, Huali
Shenzhen, Guangdong 518129 (CN)**
• **FANG, Ziyan
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **PEAK CLIPPING METHOD, SIGNAL PROCESSING APPARATUS, AND NETWORK DEVICE**

(57)  This application discloses a peak clipping method. The method includes: performing 1-out-of-N sampling on a first signal; then selecting, from a second signal obtained through the sampling, a noise point set of the second signal based on a second threshold; determining a candidate noise point set of the first signal based on the noise point set of the second signal; selecting a noise point set of the first signal from the candidate noise point set of the first signal based on a first threshold; determining a peak clipping coefficient based on the noise point set of the first signal; clipping the first signal based on the peak clipping coefficient; and finally outputting a clipped first signal. In this method, fewer sample points are used for peak clipping, reducing storage space. This application further discloses a signal processing apparatus and a network device that can implement the foregoing method.

Perform 1:N sampling on a first signal — 201

Select, from a second signal obtained through the sampling, a noise point set of the second signal based on a second threshold — 202

Determine a candidate noise point set of the first signal based on the noise point set of the second signal — 203

Select a noise point set of the first signal from the candidate noise point set based on a first threshold — 204

Determine a peak clipping coefficient based on the noise point set of the first signal — 205

Clip the first signal based on the peak clipping coefficient — 206

Output a clipped first signal — 207

FIG. 2

**Description**

This application claims priority to Chinese Patent Application No. 202210469011.9, filed with the China National Intellectual Property Administration on April 29, 2022 and entitled "PEAK CLIPPING METHOD, SIGNAL PROCESSING APPARATUS, AND NETWORK DEVICE", which is incorporated herein by reference in its entirety.

**TECHNICAL FIELD**

This application relates to the field of signal processing, and in particular, to a peak clipping method, a signal processing apparatus, and a network device.

**BACKGROUND**

A radio frequency power amplifier may be referred to as a power amplifier or a power amplifier for short, and may amplify power of a radio frequency signal, to achieve sufficient radio frequency power. A peak to average power ratio (peak to average power ratio, PAPR) of a signal affects performance of the power amplifier. For example, when an instantaneous peak value of a radio frequency signal exceeds a peak value that the power amplifier can withstand, the power amplifier is burnt. To ensure safety of the power amplifier, peak clipping is performed on the signal to reduce the PARP.

Currently, a peak clipping method based on frequency domain resource reservation (tone reservation, TR) is roughly as follows: Upsampling is performed on a time domain signal including N sample points, to obtain an upsampled signal including 4N sample points, where N is a positive integer. After peak detection is performed on the 4N sample points, a sample point exceeding a threshold is used as a noise point, a peak clipping coefficient is determined based on the noise point, and then a peak suppression signal is generated based on the peak clipping coefficient and the time domain signal, to reduce the PAPR.

In an orthogonal frequency division multiplexing (orthogonal frequency division multiplexing, OFDM) system, one symbol sample point is related to $2^{10}$ to $2^{12}$ fast Fourier transform (fast Fourier transform, FFT) points. Therefore, a network device having large cache is needed to implement the foregoing method.

**SUMMARY**

In view of this, this application provides a peak clipping method, in which peak clipping can be performed based on fewer sample points, to reduce storage space for the sample points, so that a network device having small cache can also implement the foregoing method. This application further provides a signal processing apparatus and a network device that can implement the peak clipping method.

According to a first aspect, a peak clipping method is provided. The method includes: performing 1-out-of-N sampling on a first signal; then selecting, from a second signal obtained through the sampling, a noise point set of the second signal based on a second threshold; determining a candidate noise point set of the first signal based on the noise point set of the second signal; selecting a noise point set of the first signal from the candidate noise point set of the first signal based on a first threshold; determining a peak clipping coefficient based on the noise point set of the first signal; clipping the first signal based on the peak clipping coefficient; and finally outputting a clipped first signal. N is an integer greater than 1. An amplitude of each noise point in the noise point set of the second signal is greater than the second threshold, and an amplitude of each noise point in the noise point set of the first signal exceeds the first threshold.

According to this implementation, the second signal is obtained by undersampling, and a quantity of sample points of the second signal is 1/N of a quantity of sample points of the first signal. 1 Correspondingly, storage space for the

second signal is $\dfrac{1}{4N}$ of sample point storage space in the conventional peak clipping method, and therefore, the storage space can be reduced. In addition, after a low-precision noise point is found from the second signal, a high-precision noise point is obtained from a vicinity of the low-precision noise point, so that a method for obtaining the high-precision noise point is provided, to obtain the peak clipping coefficient for clipping, thereby effectively reducing a PARA.

**[0009]** In a possible implementation, the determining a candidate noise point set of the first signal based on the noise point set of the second signal includes: determining an expanded sample point set based on the noise point set of the second signal, where the expanded sample point set includes the noise point set of the second signal and an adjacent sample point of each noise point in the second signal; determining first signal index values of M candidate noise points based on a second signal index value of each noise point; determining the first signal index values of the M candidate noise points based on a second signal index value of each adjacent sample point; and selecting the candidate noise point set of the first signal from the first signal based on the first signal index values of the candidate noise points. M is a positive integer and M≤N. Therefore, edge expansion can be performed based on a noise point of the second signal, to obtain a sample point in a vicinity of the noise point.

According to a second aspect, a peak clipping method is provided. The method includes: selecting, from a first signal, a noise point set of the first signal; determining an expanded sample point set based on the noise point set of the first signal; performing upsampling based on the expanded sample point set; selecting, from a sample point set obtained through the upsampling, a target noise point having an amplitude exceeding a second threshold; determining a peak clipping coefficient based on the target noise point; clipping the first signal based on the peak clipping coefficient; and finally outputting a clipped first signal. An amplitude of each noise point in the noise point set of the first signal exceeds a first threshold. The expanded sample point set includes the noise point set of the first signal and an adjacent sample point of each noise point in the first signal. According to this implementation, a quantity of sample points that need to be stored during sampling is far less than 4N, and therefore, storage space for the sample points can be reduced. In addition, the expanded sample point set is obtained based on the noise point set of the first signal, and then the upsampling is performed on the expanded sample point set. In this way, a quantity of noise points can be increased, and a PAPR can be effectively reduced.

According to a third aspect, a peak clipping method is provided. The method includes: selecting a first noise point set from a first channel signal based on a first threshold, and selecting a second noise point set from a second channel signal based on a second threshold; selecting a first target sample point set from the second channel signal based on an index value of the first noise point set; selecting a second target sample point set from the first channel signal based on an index value of the second noise point set; generating a first candidate noise point set based on the first noise point set and the first target sample point set and generating a second candidate noise point set based on the second noise point set and the second target sample point set; determining, from the first candidate noise point set and the second candidate noise point set, a combined signal noise point having an amplitude exceeding a third threshold; determining a combined peak clipping coefficient based on the combined signal noise point; determining a first peak clipping coefficient and a second peak clipping coefficient based on the combined peak clipping coefficient; converting the first channel signal into a first peak suppression signal based on the first peak clipping coefficient; converting the second channel signal into a second peak suppression signal based on the second peak clipping coefficient; and finally outputting the first peak suppression signal and the second peak suppression signal. An amplitude of each noise point in the first noise point set exceeds the first threshold, and an amplitude of each noise point in the second noise point set exceeds the second threshold. According to this embodiment, sharing of a noise point, a noise point index value, and a target sample point set of a separate channel can greatly reduce shared sample point data, thereby reducing space for storing the sample point data and reducing a delay of transmitting the sample point data between baseband units.

In a first possible implementation, the determining a first peak clipping coefficient and a second peak clipping coefficient based on the combined peak clipping coefficient includes: determining the first peak clipping coefficient based on the combined peak clipping coefficient, an average amplitude of the first channel signal, and a sum of the average amplitude of the first channel signal and an average amplitude of the second channel signal; and determining the second peak clipping coefficient based on the combined peak clipping coefficient, the average amplitude of the second channel signal, and the sum of the average amplitude of the first channel signal and the average amplitude of the second channel signal. In this way, a specific method for determining the first peak clipping coefficient and the second peak clipping coefficient based on the combined peak clipping coefficient is provided.

In a second possible implementation, the converting the first channel signal into a first peak suppression signal based on the first peak clipping coefficient includes: generating a first noise signal based on the first peak clipping coefficient and a first noise base signal corresponding to the first channel signal; and generating the first peak suppression signal based on the first noise signal and the first channel signal; and the converting the second channel signal into a second peak suppression signal based on the second peak clipping coefficient includes: generating a second noise signal based on the second peak clipping coefficient and a second noise base signal corresponding to the second channel signal; and generating the second peak suppression signal based on the second noise signal and the second channel signal. This provides a specific method for performing peak clipping on the first channel signal and the second channel signal.

According to a fourth aspect, a peak clipping method is provided. The method includes: generating a frequency-shifted signal based on a first channel signal; generating a combined signal based on the frequency-shifted signal and a second channel signal; determining a combined peak clipping coefficient based on a noise point set of the combined signal; determining a first peak clipping coefficient and a second peak clipping coefficient based on the combined peak clipping coefficient; converting the first channel signal into a first peak suppression signal based on the first peak clipping coefficient; converting the second channel signal into a second peak suppression signal based on the second peak clipping coefficient; and then outputting the first peak suppression signal and the second peak suppression signal. Because a difference between a modulation frequency of the frequency-shifted signal and a modulation frequency of the first signal is an integer multiple of a sampling bandwidth of the first signal, a time domain feature of the frequency-shifted signal can be consistent with that of the first signal, and a noise point of the combined signal can be determined based on the combined signal. A sampling bandwidth required in this method is not less than a larger sampling bandwidth in a sampling bandwidth of the second signal and a sampling bandwidth of the frequency-shifted signal. In comparison with signal combination implemented by using an ultra-high sampling bandwidth, according to the method in this application, the sampling bandwidth can be greatly reduced.

In a first possible implementation, the determining a first peak clipping coefficient and a second peak clipping coefficient based on the combined peak clipping coefficient includes: determining the first peak clipping coefficient based on the combined peak clipping coefficient, an average amplitude of the first channel signal, and a sum of the average amplitude of the first channel signal and an average amplitude of the second channel signal; and determining the second peak clipping coefficient based on the combined peak clipping coefficient, the average amplitude of the second channel signal, and the sum of the average amplitude of the first channel signal and the average amplitude of the second channel signal. In this way, a specific method for determining the first peak clipping coefficient and the second peak clipping coefficient based on the combined peak clipping coefficient is provided.

In a second possible implementation, the converting the first channel signal into a first peak suppression signal based on the first peak clipping coefficient includes: generating a first noise signal based on the first peak clipping coefficient and a first noise base signal corresponding to the first channel signal; and generating the first peak suppression signal based on the first noise signal and the first channel signal; and the converting the second channel signal into a second peak suppression signal based on the second peak clipping coefficient includes: generating a second noise signal based on the second peak clipping coefficient and a second noise base signal corresponding to the second channel signal; and generating the second peak suppression signal based on the second noise signal and the second channel signal. This provides a specific method for performing peak clipping on the first channel signal and the second channel signal.

According to a fifth aspect, a signal processing apparatus is provided. The signal processing apparatus includes a baseband unit and a communication interface. The baseband unit is configured to: perform 1-out-of-N sampling on a first signal; select, from a second signal obtained through the sampling, a noise point set of the second signal based on a second threshold; determine a candidate noise point set of the first signal based on the noise point set of the second signal; select a noise point set of the first signal from the candidate noise point set of the first signal based on a first threshold; determine a peak clipping coefficient based on the noise point set of the first signal; and clip the first signal based on the peak clipping coefficient; and the communication interface is configured to output a clipped first signal. N is an integer greater than 1. An amplitude of each noise point in the noise point set of the second signal is greater than the second threshold. An amplitude of each noise point in the noise point set of the first signal exceeds the first threshold. In a possible implementation, the baseband unit is specifically configured to: determine an expanded sample point set based on the noise point set of the second signal, where the expanded sample point set includes the noise point set of the second signal and an adjacent sample point of each noise point in the second signal; determine first signal index values of M candidate noise points based on a second signal index value of each noise point; determine the first signal index values of the M candidate noise points based on a second signal index value of each adjacent sample point, where M is a positive integer and $M \leq N$; and select the candidate noise point set of the first signal from the first signal based on the index values of the candidate noise points.

For term explanations, steps performed by the units, and beneficial effects in the fifth aspect, refer to corresponding descriptions in the first aspect.

According to a sixth aspect, a signal processing apparatus is provided. The signal processing apparatus includes a baseband unit and a communication interface. The baseband unit is configured to: select, from a first signal, a noise point set of the first signal; determine an expanded sample point set based on the noise point set of the first signal; perform upsampling based on the expanded sample point set; select, from a sample point set obtained through the upsampling, a target noise point having an amplitude exceeding a second threshold; determine a peak clipping coefficient based on the target noise point; and clip the first signal based on the peak clipping coefficient; and the communication interface is configured to output a clipped first signal. An amplitude of each noise point in the noise point set of the first signal exceeds a first threshold. The expanded sample point set includes the noise point set of the first signal and an adjacent sample point of each noise point in the first signal. For term explanations, steps performed by the signal processing apparatus, and beneficial effects in the sixth aspect, refer to corresponding descriptions in the second aspect.

According to a seventh aspect, a signal processing apparatus is provided. The signal processing apparatus includes a first baseband unit, a second baseband unit, a combination unit, and a communication interface. The first baseband unit is configured to select a first noise point set from a first channel signal based on a first threshold. The second baseband unit is configured to select a second noise point set from a second channel signal based on a second threshold. The second baseband unit is further configured to select a first target sample point from the second channel signal based on an index value of the first noise point set obtained by the first baseband unit. The first baseband unit is further configured to select a second target sample point from the first channel signal based on an index value of the second noise point set obtained by the second baseband unit. The combination unit is configured to: generate a first candidate noise point set based on the first noise point set and the first target sample point set, and generate a second candidate noise point set based on the second noise point set and the second target sample point set; determine, from the first candidate noise point set and the second candidate noise point set, a combined signal noise point having an amplitude exceeding a third threshold; determine a combined peak clipping coefficient based on the combined signal noise point; and determine a first peak clipping coefficient and a second peak clipping coefficient based on the combined peak clipping coefficient. The first baseband unit is further configured to convert the first channel signal into a first peak suppression signal based on the first peak clipping coefficient. The second baseband unit is further configured to convert the second channel signal into a second peak suppression signal based on the second peak clipping coefficient. The communication interface is configured to output the first peak suppression signal and the second peak suppression signal. An amplitude of each noise point in the first noise point set exceeds the first threshold. An amplitude of each noise point in the second noise point set exceeds the second threshold.

In a first possible implementation, the combination unit is specifically configured to: determine the first peak clipping coefficient based on the combined peak clipping coefficient, an average amplitude of the first channel signal, and a sum of the average amplitude of the first channel signal and an average amplitude of the second channel signal; and determine the second peak clipping coefficient based on the combined peak clipping coefficient, the average amplitude of the second channel signal, and the sum of the average amplitude of the first channel signal and the average amplitude of the second channel signal.

In a second possible implementation, the first baseband unit is specifically configured to: generate a first noise signal based on the first peak clipping coefficient and a first noise base signal corresponding to the first channel signal; and combine the first noise signal and the first channel signal into the first peak suppression signal. The second baseband unit is specifically configured to: generate a second noise signal based on the second peak clipping coefficient and a second noise base signal corresponding to the second channel signal; and combine the second noise signal and the second channel signal into the second peak suppression signal.

For term explanations, steps performed by the signal processing apparatus, and beneficial effects in the seventh aspect, refer to corresponding descriptions in the third aspect.

According to an eighth aspect, a signal processing apparatus is provided. The signal processing apparatus includes a first baseband unit, a second baseband unit, and a communication interface. The second baseband unit is configured to: generate a frequency-shifted signal based on a first channel signal obtained by the first baseband unit; generate a combined signal based on the frequency-shifted signal and a second channel signal; determine a combined peak clipping coefficient based on the combined signal; determine a first peak clipping coefficient and a second peak clipping coefficient based on the combined peak clipping coefficient; and convert the second channel signal into a second peak suppression signal based on the second peak clipping coefficient. The first baseband unit is configured to convert the first channel signal into a first peak suppression signal based on the first peak clipping coefficient. The communication interface is configured to output the first peak suppression signal and the second peak suppression signal. A difference between a modulation frequency of the frequency-shifted signal and a modulation frequency of the first signal is an integer multiple of a sampling bandwidth of the first signal.

In a first possible implementation, the second baseband unit is specifically configured to determine: the first peak clipping coefficient based on the combined peak clipping coefficient, an average amplitude of the first channel signal, and a sum of the average amplitude of the first channel signal and an average amplitude of the second channel signal; and determine the second peak clipping coefficient based on the combined peak clipping coefficient, the average amplitude of the second channel signal, and the sum of the average amplitude of the first channel signal and the average amplitude of the second channel signal.

In a second possible implementation, the first baseband unit is specifically configured to: generate a first noise signal based on the first peak clipping coefficient and a first noise base signal corresponding to the first channel signal; and generate the first peak suppression signal based on the first noise signal and the first channel signal. The second baseband unit is specifically configured to: generate a second noise signal based on the second peak clipping coefficient and a second noise base signal corresponding to the second channel signal; and generate the second peak suppression signal based on the second noise signal and the second channel signal.

For term explanations, steps performed by the signal processing apparatus, and beneficial effects in the eighth aspect, refer to corresponding descriptions in the fourth aspect.

According to a ninth aspect, a network device is provided. The network device includes the signal processing apparatus according to any one of the fifth aspect to the eighth aspect, and a remote radio unit including a radio frequency power amplifier. In a possible implementation, the network device further includes an antenna unit.

According to a tenth aspect, a signal processing apparatus is provided, including a processor and a memory. The memory is configured to store a program, and the processor executes the program to implement the method according to any one of the first aspect to the fourth aspect.

According to an eleventh aspect, a computer-readable storage medium is provided. The computer-readable storage medium stores instructions. When the instructions are run on a computer, the computer is enabled to perform the method according to the foregoing aspects.

According to a twelfth aspect, a computer program product including instructions is provided. When the computer program product runs on a computer, the computer is enabled to perform the method according to the foregoing aspects.

According to a thirteenth aspect, a chip system is provided, including at least one processor. The processor is coupled to a memory. The memory is configured to store a computer program or instructions. The processor is configured to execute the computer program or the instructions to implement the method according to the foregoing first aspects.

**BRIEF DESCRIPTION OF DRAWINGS**

FIG. 1 is a diagram of an application scenario of a peak clipping method according to an embodiment of this application;

FIG. 2 is a flowchart of a peak clipping method according to an embodiment of this application;

FIG. 3 is a diagram of undersampling a signal according to an embodiment of this application;

FIG. 4 is another flowchart of a peak clipping method according to an embodiment of this application;

FIG. 5 is a diagram of upsampling according to an embodiment of this application;

FIG. 6 is another flowchart of a peak clipping method according to an embodiment of this application;

FIG. 7 is a diagram of determining a combined signal noise point based on two carrier signals according to an embodiment of this application;

FIG. 8 is another flowchart of a peak clipping method according to an embodiment of this application;

FIG. 9 is a diagram of signal frequency shift according to an embodiment of this application;

FIG. 10 is a diagram of a structure of a signal processing apparatus according to an embodiment of this application;

FIG. 11 is another diagram of a structure of a signal processing apparatus according to an embodiment of this application;

FIG. 12 is another diagram of a structure of a signal processing apparatus according to an embodiment of this application;

FIG. 13 is a diagram of a structure of a network device according to an embodiment of this application; and

FIG. 14 is another diagram of a structure of a network device according to an embodiment of this application.

**DESCRIPTION OF EMBODIMENTS**

The method in this application is applicable to a network device. The network device may be but is not limited to a base station or a transmission point. The base station may be an evolved NodeB (eNB), a gNB, or a base station after a 5G communication system.

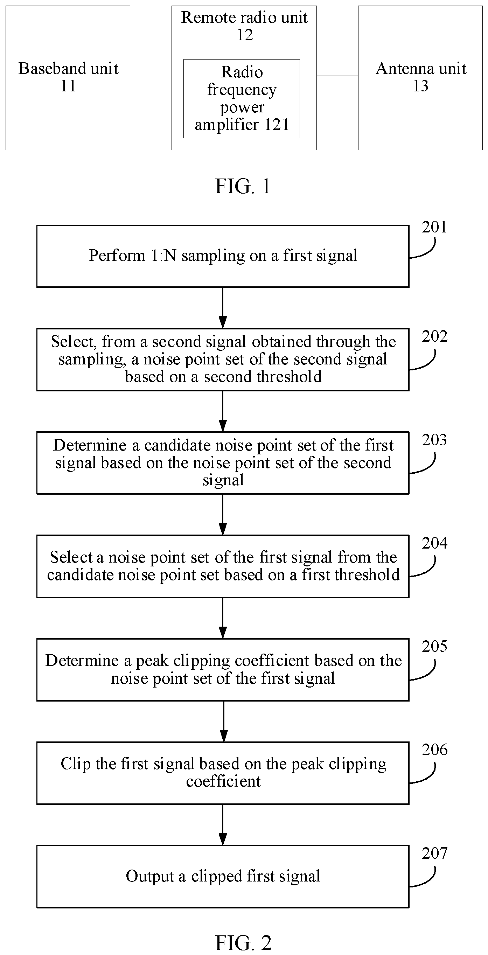

Refer to FIG. 1. In an embodiment, the base station includes a baseband unit 11, a remote radio unit 12, and an antenna unit 13.

The baseband unit 11 is configured to complete a function of processing uplink and downlink baseband data. Specifically, the baseband unit 11 may generate a baseband signal based on data or convert a received baseband signal into data. The baseband unit 11 further includes a digital-to-analog conversion unit, an analog-to-digital conversion unit, or the like. The baseband unit 11 and the remote radio unit 12 are connected via a common public radio interface (common public radio interface, CPRI), and the CPRI supports a plurality of flexible networking modes such as star networking, chain networking, ring networking, and dual-star networking.

The remote radio unit 12 is configured to complete a function of receiving and sending a radio signal. The remote radio unit 12 includes a radio frequency power amplifier 121 configured to amplify signal power. The antenna unit 13 includes one or more antennas. The base station may further include a power supply and the like.

In a wireless communication system, a transmit signal is usually processed by the baseband unit 11 and the remote radio unit 12, and then a processed transmit signal is sent from the antenna unit 13. During actual application, the baseband unit 11 clips the transmit signal, to reduce a PAPR value of the transmit signal to a specific range, so as to ensure safety of the radio frequency power amplifier 121. In the conventional method, large cache and a long delay are required. In this case, this application provides a method for performing peak clipping by using fewer sample points. The foregoing baseband unit or network device may implement the peak clipping method in this application. The following describes the peak clipping method in this application. Refer to FIG. 2. An embodiment of the peak clipping method in this application includes the following steps.

Step 201: Perform 1-out-of-N sampling on a first signal.

N is a positive integer greater than 1. The 1-out-of-N sampling indicates that one sample point is sampled from every N sample points. For example, if N=2, and the first signal has 2048 sample points, the first signal is sampled by performing 1-out-of-2 sampling to obtain 1024 sample points as a second signal.

Step 202: Select, from a second signal obtained through the sampling, a noise point set of the second signal based on a second threshold.

An amplitude of each noise point in the noise point set of the second signal is greater than the second threshold.

Step 203: Determine a candidate noise point set of the first signal based on the noise point set of the second signal.

Optionally, step 203 includes: determining an expanded sample point set based on the noise point set of the second signal, where the expanded sample point set includes the noise point set of the second signal and an adjacent sample point of each noise point in the second signal; determining first signal index values of M candidate noise points based on a second signal index value of each noise point; determining the first signal index values of the M candidate noise points based on a second signal index value of each adjacent sample point; and selecting the candidate noise point set from the first signal based on the first signal index values of the candidate noise points. The first signal index value refers to a sequence number of a sample point in the first signal. The second signal index value is a sequence number of a sample point in the second signal.

M is a positive integer and M≤N. An index value of an $i^{th}$ sample point in the second signal is denoted as i, and an index value corresponding to the $i^{th}$ sample point in the first signal includes: i*M, ..., i*M - (M - 1). For example, index values of a noise point set $I_2$ of the second signal include: 3, 8, 11, 25, 26, and 28. Two adjacent sample points are selected for each noise point, and index values of an expanded sample point set $I_{2,sp}$ include: 2, 3, 4; 7, 8, 9; 10, 11, 12; 24, 25, 26; and 27, 28, 29. When M=2, index values of a candidate noise point set $I_{l,sp}$ include: 4, 6, 8; 14, 16, 18; 20, 22, 24; 48, 50, 52; 54, 56, 58; 3, 5, 7; 13, 15, 17; 19, 21, 23; 47, 49, 51; and 53, 55, 57. It should be noted that, in this application, one adjacent sample point may be selected for each noise point to obtain an expanded sample point set.

Step 204: Select a noise point set of the first signal from the candidate noise point set based on a first threshold.

An amplitude of each noise point in the noise point set of the first signal exceeds a first threshold. The first threshold is less than or equal to a maximum allowed peak value of a power amplifier. In some embodiments, the maximum allowed peak value of the power amplifier ranges from 7.5 to 9.5 dB. A first threshold Thre1 and a second threshold Thre2 satisfy the following formula: Thre1=Thre2+Delta. Delta may be, but is not limited to, 2 decibels (dBs), and may be specifically set based on an actual situation.

Step 205: Determine a peak clipping coefficient based on the noise point set of the first signal. Step 206: Clip the first signal based on the peak clipping coefficient.

Step 207: Output a clipped first signal.

In this embodiment, the second signal is obtained by undersampling, and a quantity of sample points of the second signal is 1/N of a quantity of sample points of the first signal. Correspondingly, storage space for the second signal

is $\dfrac{1}{4N}$ of sample point storage space in the conventional peak clipping method, and therefore, the sample point storage space can be reduced.

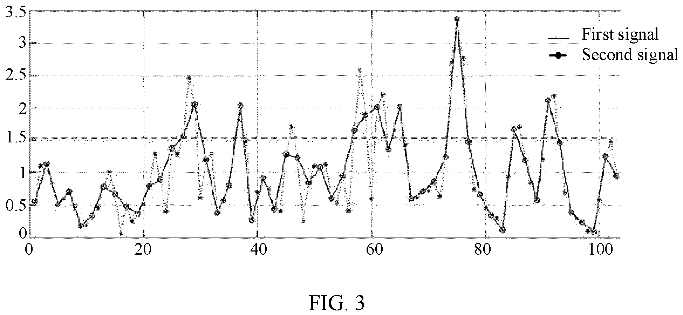

In addition, after a low-precision noise point is found from the second signal, a high-precision noise point is obtained from a vicinity of the low-precision noise point, so that a method for obtaining the high-precision noise point is provided. Clipping is performed based on the peak clipping coefficient obtained using the high-precision noise point, so that a PARA can be reduced. The following describes an undersampling method. In another embodiment, the second signal obtained by performing 1-out-of-2 sampling on the first signal is shown in FIG. 3. A value on a horizontal axis represents an index value of a sample point, and a value on a vertical axis represents an amplitude of the signal, in a unit of decibels (dBs). A dotted line is the second threshold, and a sample point that exceeds the second threshold and that is in the second signal is a noise point in the second signal.

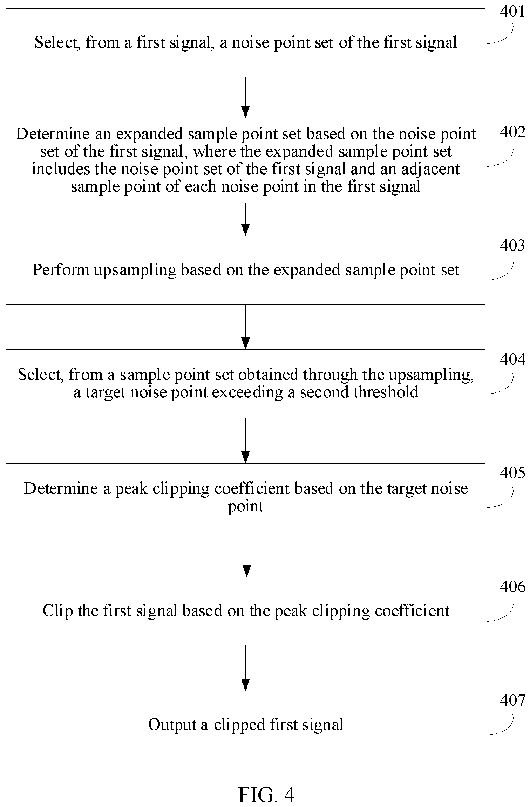

The following describes another peak clipping method. Refer to FIG. 4. Another embodiment of the peak clipping method in this application includes the following steps.

Step 401: Select, from a first signal, a noise point set of the first signal.

An amplitude of each noise point in the noise point set of the first signal exceeds a first threshold. Step 402: Determine an expanded sample point set based on the noise point set of the first signal, where the expanded sample point set includes the noise point set of the first signal and an adjacent sample point of each noise point in the first signal.

In an example, index values of a noise point set $I_1$ of the first signal include 3, 8, 11, 25, 26, and 28. Index values of an expanded sample point set $I_{1,sp}$ include: 2, 3, 4; 7, 8, 9; 10, 11, 12; 24, 25, 26; and 27, 28, 29. It should be understood that, when there are same sample points in the expanded sample point set, deduplication may be performed to save computing resources.

Step 403: Perform upsampling based on the expanded sample point set. The upsampling refers to performing interpolation on the expanded sample point set to obtain more sample points. A function used for the upsampling may be, but is not limited to, a sinc interpolation function.

Step 404: Select, from a sample point set obtained through the upsampling, a target noise point having an amplitude exceeding a second threshold.

The second threshold is less than or equal to a maximum allowed peak value of a power amplifier. In some embodiments, the maximum allowed peak value of the power amplifier ranges from 7.5 to 9.5 dB. A first threshold Thre1 and a second threshold Thre2 satisfy the following formula: Thre1=Thre2-Delta. Delta may be, but is not limited to, 2 decibels (dBs), and may be specifically set based on an actual situation. The first threshold and the second threshold may be set based on an actual situation. This is not limited in this application.

Step 405: Determine a peak clipping coefficient based on the target noise point.

Step 406: Clip the first signal based on the peak clipping coefficient.

Step 407: Output a clipped first signal.

In this embodiment, a quantity of sample points that need to be stored during sampling is far less than 4N, and therefore, storage space for the sample points can be reduced.

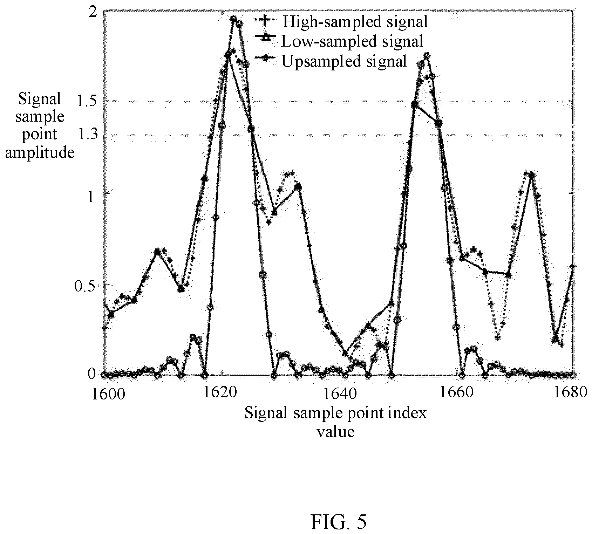

In addition, the expanded sample point set is obtained based on the noise point set of the first signal, and then the upsampling is performed on the expanded sample point set. In this way, a quantity of noise points can be increased. For signals in a same frequency domain, a PAPR of the signal increases with an increase of a quantity of FFT points. Therefore, the PAPR can be better reduced. The following describes the process of upsampling based on the noise point in the embodiment shown in FIG. 4 with reference to FIG. 5. In FIG. 5, a value on a horizontal axis represents a signal sample point index value, a value on a vertical axis represents a signal sample point amplitude, the second threshold is 1.5, and the first threshold is 1.3. A sampling rate of a high-sampled signal is four times that of a low-sampled signal.

Refer to FIG. 5. Sample points greater than or equal to 1.3 are selected from the low-sampled signal as sample noise points. The upsampling is performed based on the sample noise points to obtain an upsampled signal. Noise points exceeding 1.5 are selected from the upsampled signal as noise points of the high-sampled signal. It can be seen from FIG. 5 that, the noise points obtained according to the foregoing method are very close to noise points obtained based on an actual high-sampled signal. Therefore, by using the foregoing method, noise in the high-sampled signal can be determined based on a small quantity of sample points.

It should be noted that, a process of upsampling based on an adjacent sample point of the noise point is similar to a process of upsampling based on the noise point. After the upsampling is performed on the sample noise point and the adjacent sample point of the sample noise point, a sample point exceeding the second threshold is selected from the sample point set obtained through the upsampling as the target noise point.

Currently, in some carrier aggregation systems or multi-connection systems, one network device includes a remote radio unit and a plurality of baseband units, each baseband unit processes one carrier, and then the remote radio unit combines a plurality of processed carriers. To ensure safety of the power amplifier, clipping needs to be performed on the separate carriers before the combination. During the clipping, one baseband unit needs to obtain sample point data of all the carriers, resulting in high requirements on a transmission signal delay between the baseband units and storage space for the sample points.

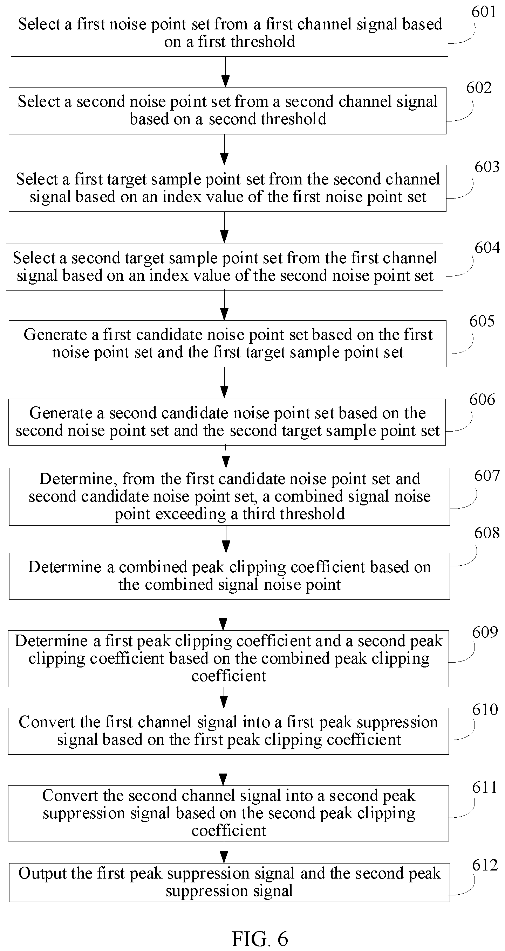

Refer to FIG. 6. Another embodiment of the peak clipping method according to this application includes the following steps.

Step 601: Select a first noise point set from a first channel signal based on a first threshold.

An amplitude of each noise point in the first noise point set exceeds the first threshold.

Step 602: Select a second noise point set from a second channel signal based on a second threshold. An amplitude of each noise point in the second noise point set exceeds the second threshold. Step 603: Select a first target sample point set from the second channel signal based on an index value of the first noise point set.

Step 604: Select a second target sample point set from the first channel signal based on an index value of the second noise point set.

Step 605: Generate a first candidate noise point set based on the first noise point set and the first target sample point set.

Step 606: Generate a second candidate noise point set based on the second noise point set and the second target sample point set.

Step 607: Determine, from the first candidate noise point set and the second candidate noise point set, a combined signal noise point having an amplitude exceeding a third threshold.

The third threshold is less than or equal to a maximum allowed peak value of a power amplifier.

The first threshold $Thre_1$, the second threshold $Thre_2$, and the third threshold $Thre_3$ satisfy the following formula:

$$Thre_1 = \frac{p_1}{p_1 + p_2} Thre_3$$

$$Thre_2 = \frac{p_2}{p_1 + p_2} Thre_3$$

$p_1$ is an average amplitude of the first channel signal, and $p_2$ is an average amplitude of the second channel signal. $p_1$, $p_2$, and $p_1 + p_2$ may be preset, and may be specifically obtained in advance and then stored in a memory.

Step 608: Determine a combined peak clipping coefficient based on the combined signal noise point.

Step 609: Determine a first peak clipping coefficient and a second peak clipping coefficient based on the combined peak clipping coefficient.

Optionally, step 609 includes: determining the first peak clipping coefficient based on the combined peak clipping coefficient, the average amplitude of the first channel signal, and a sum of the average amplitude of the first channel signal and the average amplitude of the second channel signal; and determining the second peak clipping coefficient based on the combined peak clipping coefficient, the average amplitude of the second channel signal, and the sum of the average amplitude of the first channel signal and the average amplitude of the second channel signal.

Step 610: Convert the first channel signal into a first peak suppression signal based on the first peak clipping coefficient.

Optionally, step 610 includes: generating a first noise signal based on the first peak clipping coefficient and a first noise base signal corresponding to the first channel signal; and generating the first peak suppression signal based on the first noise signal and the first channel signal.

Step 611: Convert the second channel signal into a second peak suppression signal based on the second peak clipping coefficient.

Optionally, step 611 includes: generating a second noise signal based on the second peak clipping coefficient and a second noise base signal corresponding to the second channel signal; and generating the second peak suppression signal based on the second noise signal and the second channel signal.

Step 612: Output the first peak suppression signal and the second peak suppression signal.

It should be understood that, for more separate signals, a noise point set of each separate signal and index values of the noise point set may also be obtained according to the foregoing method, then a combined peak clipping coefficient and a separate peak clipping coefficient of the separate signal are obtained, and then clipping is performed on a separate carrier based on the separate peak clipping coefficient, to ensure safety of the power amplifier.

In this embodiment, any two baseband units may send an index value of a separate noise point to each other, so that a small amount of data needs to be transmitted. In comparison with the conventional technologies, in which any two baseband units send a whole separate signal (for example, 2048 sample points) to each other, storage space for sample point data is greatly reduced. Because the amount of data to be transmitted is small, a delay of transmitting the sample point data can be reduced.

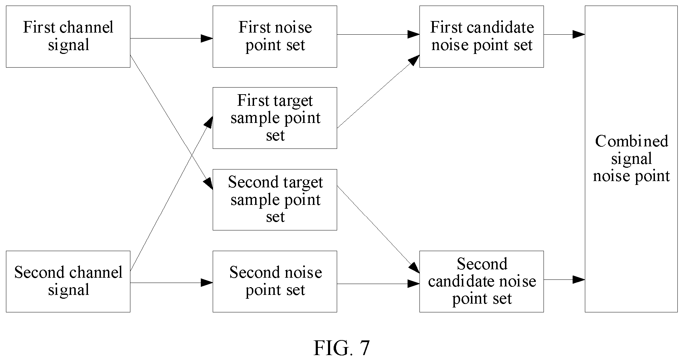

The following uses an example to describe a process of determining a combined signal noise point. Refer to FIG. 7. In an example, a first noise point set is extracted from a first channel signal based on a first threshold, and a second noise point set is extracted from a second channel signal based on a second threshold. Both an index value of the first noise point set and index values of a first candidate noise point set include 3, 11, and 26. Both an index value of the second noise point set and index values of a second candidate noise point set include 8, 25, and 28. Amplitudes of the noise points are compared with a third threshold, and a noise point exceeding the third threshold is a combined signal noise point.

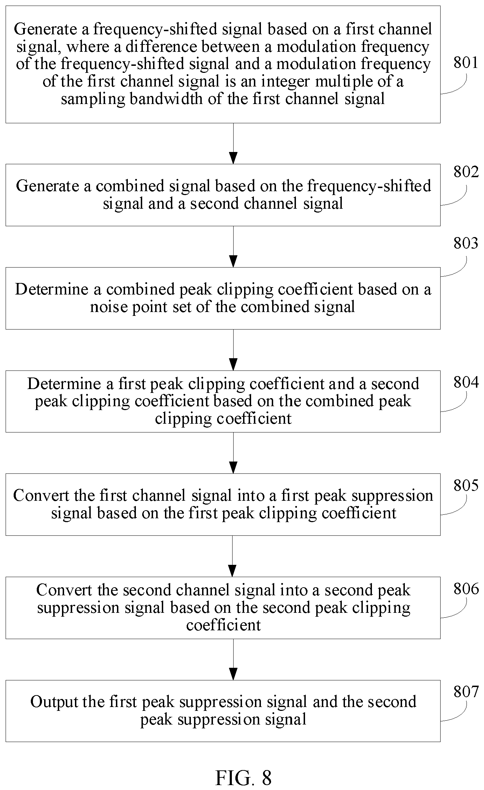

As a frequency band of a communication system is increasingly wide, aggregating a plurality of frequency bands into one radio frequency module becomes an important topic. There is an interval of several hundreds of megahertz (MHz) between different frequency ranges. Therefore, a required sampling bandwidth is at least several hundreds of MHz, resulting in a high requirement on a sampling bandwidth of a baseband unit. This application provides a peak clipping method, according to which a sampling bandwidth can be reduced. Refer to FIG. 8. Another embodiment of the peak clipping method according to this application includes the following steps.

Step 801: Generate a frequency-shifted signal based on a first channel signal, where a difference between a modulation frequency of the frequency-shifted signal and a modulation frequency of the first channel signal is an integer multiple of a sampling bandwidth of the first channel signal.

The first channel signal is a baseband signal, and the modulation frequency $f_1$ corresponding to the first channel signal may be set based on an actual situation. This is not limited in this application. Optionally, the modulation frequency of the first channel signal is greater than the modulation frequency of the frequency-shifted signal, and the modulation frequency of the first channel signal is greater than a modulation frequency of a second channel signal.

In this embodiment, the difference between the modulation frequency of the frequency-shifted signal and the modulation frequency of the first channel signal is set to the integer multiple of the sampling bandwidth of the first channel signal, so that a time domain feature of the frequency-shifted signal is consistent with a time domain feature of the first channel signal.

Step 802: Generate a combined signal based on the frequency-shifted signal and the second channel signal.

A noise point set of the combined signal is selected from the combined signal based on a maximum allowed peak value of a power amplifier.

Step 803: Determine a combined peak clipping coefficient based on the noise point set of the combined signal.

Step 804: Determine a first peak clipping coefficient and a second peak clipping coefficient based on the combined peak clipping coefficient.

Optionally, step 804 includes: determining the first peak clipping coefficient based on the combined peak clipping coefficient, an average amplitude of the first channel signal, and a sum of the average amplitude of the first channel signal and an average amplitude of the second channel signal; and determining the second peak clipping coefficient based on the combined peak clipping coefficient, the average amplitude of the second channel signal, and the sum of the average amplitude of the first channel signal and the average amplitude of the second channel signal.

Optionally, the first peak clipping coefficient $A_1$, the combined peak clipping coefficient $A'$, the average amplitude $p_1$ of the first channel signal, and the sum of the average amplitude $p_1$ of the first channel signal and the average amplitude $p_2$ of the second channel signal satisfy the following formula:

$$A_1 = \frac{p_1}{p_1 + p_2} A'$$

$p_1$, $p_2$, and $p_1 + p_2$ may be preset, and may be specifically obtained in advance and then stored in a memory.

Optionally, the second peak clipping coefficient $A_2$, the combined peak clipping coefficient $A'$, the average amplitude $p_1$ of the first channel signal, and the sum of the average amplitude $p_1$ of the first channel signal and the average amplitude $p_2$ of the second channel signal satisfy the following formula:

$$A_2 = \frac{p_1}{p_1 + p_2} A'$$

Step 805: Convert the first channel signal into a first peak suppression signal based on the first peak clipping coefficient.

Optionally, step 805 includes: generating a first noise signal based on the first peak clipping coefficient and a first noise base signal corresponding to the first channel signal; and combining the first noise signal and the first channel signal into the first peak suppression signal. The first noise base signal is a frequency signal corresponding to noise in a frequency range in which the first channel signal is located.

Step 806: Convert the second channel signal into a second peak suppression signal based on the second peak clipping coefficient.

Optionally, step 806 includes: generating a second noise signal based on the second peak clipping coefficient and a second noise base signal corresponding to the second channel signal; and combining the second noise signal and the second channel signal into the second peak suppression signal. The second noise base signal is a frequency signal corresponding to noise in a frequency range in which the second channel signal is located. It should be understood that, there is no fixed sequence between step 805 and step 806. Step 805 and step 806 may be performed in parallel.

Step 807: Output the first peak suppression signal and the second peak suppression signal.

In this embodiment, the time domain feature of the frequency-shifted signal can be consistent with that of the first channel signal through frequency-shifting. In this way, a noise point of the combined signal can be determined based on the combined signal. A sampling bandwidth required in this method is not less than a larger sampling bandwidth in a sampling bandwidth of the second channel signal and a sampling bandwidth of the frequency-shifted signal. In comparison with signal combination implemented by using an ultra-high sampling bandwidth, according to the method in this application, the sampling bandwidth can be greatly reduced.

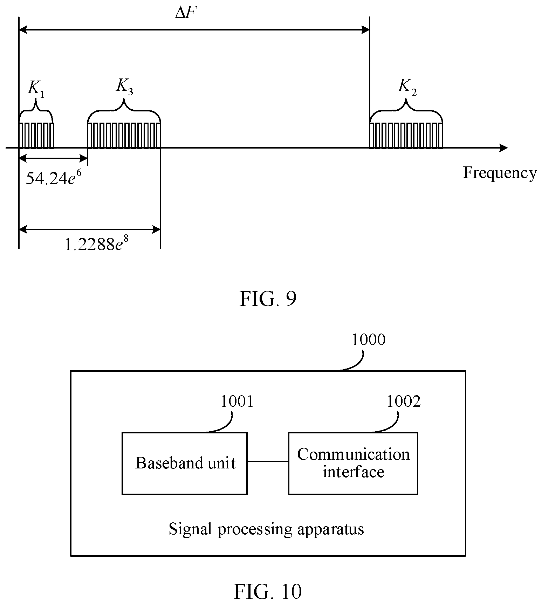

The following describes the frequency-shifted signal by using an example. Refer to FIG. 9. A frequency spacing between a signal $K_1$ and a signal $K_2$ is $\Delta F$. Frequency-shifting is performed on the signal $K_2$ to obtain a frequency-shifted signal $K_3$, and a sampling bandwidth of the signal $K_2$ is denoted as $F_s$. In this case, a frequency shift bandwidth is $MF_s$, a frequency spacing between the signal $K_1$ and the signal $K_3$ is $\Delta F - MF_s$, and $M$ is a positive integer. When a sampling bandwidth of the signal $K_1$ is $54.24e^6$ and a sampling bandwidth of the frequency-shifted signal $K_3$ is $1.2288e^8$, a noise point of a combined signal may be determined as long as a sampling bandwidth of a baseband unit reaches $1.2288e^8$, and then noise of the signal $K_1$ and the signal $K_2$ is determined based on a noise point peak clipping coefficient, to determine a peak clipping coefficient of the signal $K_1$ and a peak clipping coefficient of the signal $K_2$.

The combined signal of the signal $K_1$ and the signal $K_2$ may be represented using the following formula:

$$x(n) = x_1(n) + x_2(n)e^{j \cdot 2\pi \cdot \Delta F \cdot n} = x_1(n) + x_2(n)e^{j \cdot 2\pi \cdot (\Delta F - MF^s) \cdot n} \cdot e^{j \cdot 2\pi \cdot MF^s \cdot n}$$

$x_1(n)$ is a function of the signal $K_1$, $x_2(n)$ is a function of the signal $K_2$, and $n$ is a quantity of sample points. It should be understood that quantities of sample points of the signal $K_1$, the signal $K_2$, and the signal $K_3$ are merely examples for description, and may be specifically set based on an actual situation. $\dfrac{1}{F_s}$ is denoted as $T_s$. In this case, the foregoing formula is equivalent to:

$$x(nT_s) = x_1(nT_s) + x_2(nT_s)e^{j \cdot 2\pi \cdot (\Delta F - MF_s) \cdot nT_s}$$

It can be learned from the foregoing formula that, when the frequency shift bandwidth is equal to an integer multiple of the sampling bandwidth of the signal $K_2$, a time domain feature of the combined signal remains unchanged. Because the sampling bandwidth of the signal $K_3$ is larger than the sampling bandwidth of the signal $K_1$, the baseband unit can determine a peak clipping coefficient (that is, the first peak clipping coefficient) of the first channel signal and a peak clipping coefficient (that is, the second peak clipping coefficient) of the second channel signal based on the sampling bandwidth not less than the sampling bandwidth of the signal $K_3$, to obtain the first peak suppression signal and the second peak suppression signal. The sampling bandwidth of the signal $K_3$ is much smaller than the sampling bandwidth of the signal $K_2$. Therefore, the baseband unit can also perform sampling and peak clipping on different carriers with a large frequency spacing.

The peak clipping method in the embodiment shown in FIG. 2 or the embodiment shown in FIG. 4 may be implemented by a signal processing apparatus 1000 shown in FIG. 10. Refer to FIG. 10. In an embodiment, the signal processing apparatus 1000 in this application includes a baseband unit 1001 and a communication interface 1002. The baseband unit 1001 is configured to: perform 1-out-of-N sampling on a first signal, where N is an integer greater than 1; select, from a second signal obtained through the sampling, a noise point set of the second signal based on a second threshold, where an amplitude of each noise point in the noise point set of the second signal is greater than the second threshold; determine a candidate noise point set of the first signal based on the noise point set of the second signal; select a noise point set of the first signal from the candidate noise point set of the first signal based on a first threshold, where an amplitude of each noise point in the noise point set of the first signal exceeds the first threshold; determine a peak clipping coefficient based on the noise point set of the first signal; and clip the first signal based on the peak clipping coefficient; and the communication interface 1002 is configured to output a clipped first signal.

In an optional embodiment, the baseband unit 1001 is specifically configured to: determine an expanded sample point set based on the noise point set of the second signal, where the expanded sample point set includes the noise point set of the second signal and an adjacent sample point of each noise point in the second signal; determine first signal index values of M candidate noise points based on a second signal index value of each noise point; determine the first signal index values of the M candidate noise points based on a second signal index value of each adjacent sample point, where M is a positive integer and M≤N; and select the candidate noise point set of the first signal from the first signal based on the index values of the candidate noise points.

In another embodiment, the baseband unit 1001 is configured to: select, from a first signal, a noise point set of the first signal, where an amplitude of each noise point in the noise point set of the first signal exceeds a first threshold; determine an expanded sample point set based on the noise point set of the first signal, where the expanded sample point set includes the noise point set of the first signal and an adjacent sample point of each noise point in the first signal; perform upsampling based on the expanded sample point set; select, from a sample point set obtained through the upsampling, a target noise point having an amplitude exceeding a second threshold; determine a peak clipping coefficient based on the target noise point; and clip the first signal based on the peak clipping coefficient; and the communication interface 1002 is configured to output a clipped first signal.

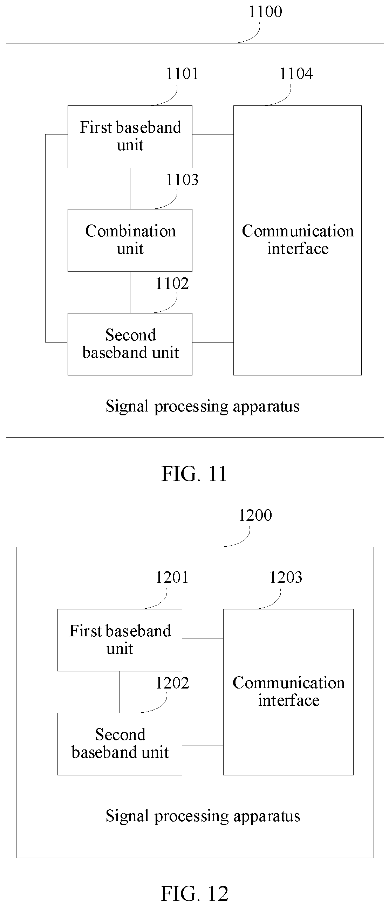

The peak clipping method in the embodiment shown in FIG. 6 may be implemented by a signal processing apparatus 1100 shown in FIG. 11. Refer to FIG. 11. In an embodiment, the signal processing apparatus 1100 includes a first baseband unit 1101, a second baseband unit 1102, a combination unit 1103, and a communication interface 1104.

The first baseband unit 1101 is configured to select a first noise point set from a first channel signal based on a first threshold, where an amplitude of each noise point in the first noise point set exceeds the first threshold.

The second baseband unit 1102 is configured to select a second noise point set from a second channel signal based on a second threshold, where an amplitude of each noise point in the second noise point set exceeds the second threshold.

The second baseband unit 1102 is further configured to select a first target sample point from the second channel signal based on an index value of the first noise point set obtained by the first baseband unit 1101.

The first baseband unit 1101 is further configured to select a second target sample point from the first channel signal based on an index value of the second noise point set obtained by the second baseband unit 1102.

The combination unit 1103 is configured to: generate a first candidate noise point set based on the first noise point set and the first target sample point set, and generate a second candidate noise point set based on the second noise point set and the second target sample point set; determine, from the first candidate noise point set and the second candidate noise point set, a combined signal noise point having an amplitude exceeding a third threshold; determine a combined peak clipping coefficient based on the combined signal noise point; and determine a first peak clipping coefficient and a second peak clipping coefficient based on the combined peak clipping coefficient. The first baseband unit 1101 is further configured to convert the first channel signal into a first peak suppression signal based on the first peak clipping coefficient.

The second baseband unit 1102 is further configured to convert the second channel signal into a second peak suppression signal based on the second peak clipping coefficient.

The communication interface 1104 is configured to output the first peak suppression signal and the second peak suppression signal.

In an optional embodiment, the combination unit 1103 is specifically configured to: determine the first peak clipping coefficient based on the combined peak clipping coefficient, an average amplitude of the first channel signal, and a sum of the average amplitude of the first channel signal and an average amplitude of the second channel signal; and determine the second peak clipping coefficient based on the combined peak clipping coefficient, the average amplitude of the second channel signal, and the sum of the average amplitude of the first channel signal and the average amplitude of the second channel signal.

In another optional embodiment, the first baseband unit 1101 is specifically configured to: generate a first noise signal based on the first peak clipping coefficient and a first noise base signal corresponding to the first channel signal; and combine the first noise signal and the first channel signal into the first peak suppression signal. The second baseband unit 1102 is specifically configured to: generate a second noise signal based on the second peak clipping coefficient and a second noise base signal corresponding to the second channel signal; and combine the second noise signal and the second channel signal into the second peak suppression signal.

The clipping method in the embodiment shown in FIG. 6 may alternatively be implemented by a signal processing apparatus 1200 shown in FIG. 12. The steps performed by the combination unit 1103 in the embodiment shown in FIG. 11 may be implemented by a first baseband unit 1201 or a second baseband unit 1202. The following uses the first baseband unit 1201 as an example for description. Refer to FIG. 12. In another embodiment, the signal processing apparatus 1200 includes the first baseband unit 1201, the second baseband unit 1202, and a communication interface 1203.

The first baseband unit 1201 is configured to select a first noise point set from a first channel signal based on a first threshold, where an amplitude of each noise point in the first noise point set exceeds the first threshold. The second baseband unit 1202 is configured to select a second noise point set from a second channel signal based on a second threshold, where an amplitude of each noise point in the second noise point set exceeds the second threshold. The second baseband unit 1202 is further configured to select a first target sample point set from the second channel signal based on an index value of the first noise point set obtained by the first baseband unit. The first baseband unit 1201 is further configured to select a second target sample point set from the first channel signal based on an index value of the second noise point set obtained by the second baseband unit. The first baseband unit 1201 is configured to: generate a first candidate noise point set based on the first target sample point set and the first noise point set; generate a second candidate noise point set based on the second target sample point set and the second noise point set; determine, from the first candidate noise point set and the second candidate noise point set, a combined signal noise point having an amplitude exceeding a third threshold; determine a combined peak clipping coefficient based on the combined signal noise point; determine a first peak clipping coefficient and a second peak clipping coefficient based on the combined peak clipping coefficient; and convert the first channel signal into a first peak suppression signal based on the first peak clipping coefficient. The second baseband unit 1202 is further configured to convert the second channel signal into a second peak suppression signal based on the second peak clipping coefficient. The communication interface 1203 is configured to output the first peak suppression signal and the second peak suppression signal.

In this embodiment, the first baseband unit 1201 may obtain the second noise point set, the index value of the second noise point set, and the first target sample point set from the second baseband unit 1202, then obtain a combined noise point set and the combined peak clipping coefficient based on the first noise point set, the second noise point set, the first target sample point set, and the second target sample point set, and after determining the first peak clipping coefficient and the second peak clipping coefficient based on the combined peak clipping coefficient, perform clipping based on the first peak clipping coefficient and the second peak clipping coefficient. Because a quantity of noise points is usually small, shared data between basebands units can be greatly reduced, thereby saving storage space for the sample points and reducing a sample point transmission delay. A process in which the second baseband unit 1202 implements a function of the combination unit 1103 is similar to a process in which the first baseband unit 1201 implements a function of the combination unit 1103.

The peak clipping method in the embodiment shown in FIG. 8 may alternatively be implemented by a signal processing apparatus 1200 shown in FIG. 12. Refer to FIG. 12. In another embodiment, the signal processing apparatus 1200 includes a first baseband unit 1201, a second baseband unit 1202, and a communication interface 1203.

The second baseband unit 1202 is configured to generate: a frequency-shifted signal based on a first channel signal obtained by the first baseband unit 1201, where a difference between a modulation frequency of the frequency-shifted signal and a modulation frequency of the first channel signal is an integer multiple of a sampling bandwidth of the first channel signal; generate a combined signal based on the frequency-shifted signal and a second channel signal; determine a combined peak clipping coefficient based on the combined signal; determine a first peak clipping coefficient and a second peak clipping coefficient based on the combined peak clipping coefficient; and convert the second channel signal into a second peak suppression signal based on the second peak clipping coefficient.

The first baseband unit 1201 is configured to convert the first channel signal into a first peak suppression signal based on the first peak clipping coefficient.

The communication interface 1203 is configured to output the first peak suppression signal and the second peak suppression signal.

In an optional embodiment, the second baseband unit 1202 is specifically configured to: determine the first peak clipping coefficient based on the combined peak clipping coefficient, an average amplitude of the first channel signal, and a sum of the average amplitude of the first channel signal and an average amplitude of the second channel signal; and determine the second peak clipping coefficient based on the combined peak clipping coefficient, the average amplitude of the second channel signal, and the sum of the average amplitude of the first channel signal and the average amplitude of the second channel signal.

In another optional embodiment, the first baseband unit 1201 is specifically configured to: generate a first noise signal based on the first peak clipping coefficient and a first noise base signal corresponding to the first channel signal; and generate the first peak suppression signal based on the first noise signal and the first channel signal. The second baseband unit 1202 is specifically configured to: generate a second noise signal based on the second peak clipping coefficient and a second noise base signal corresponding to the second channel signal; and generate the second peak suppression signal based on the second noise signal and the second channel signal.

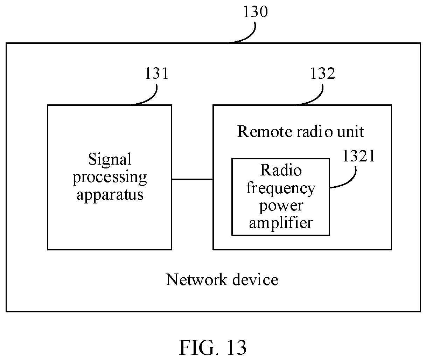

This application further provides a network device including a signal processing apparatus and a remote radio unit. Refer to FIG. 13. In an embodiment, the network device 130 includes a signal processing apparatus 131 and a remote radio unit 132 including a radio frequency power amplifier 1321. The signal processing apparatus 131 may be the signal processing apparatus 1000 in the embodiment shown in FIG. 10, the signal processing apparatus 1100 in the embodiment shown in FIG. 11, or the signal processing apparatus 1200 in the embodiment shown in FIG. 12.

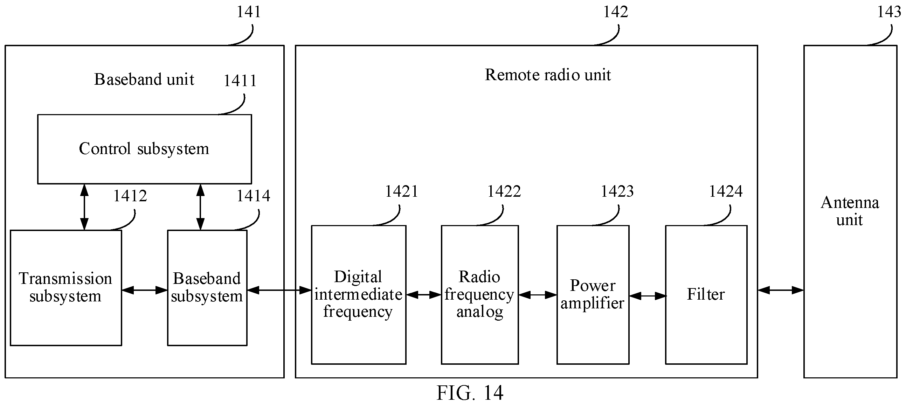

Refer to FIG. 14. In another embodiment, the network device in this application includes: a baseband unit 141, a remote radio unit 142, and an antenna unit 143. The baseband unit 141 includes a control subsystem 1411, a transmission subsystem 1412, and a baseband subsystem 1414.

It should be understood that quantities of baseband units 141, remote radio units 142, and antenna units 143 in the network device are not limited in this application. When the network device includes a plurality of baseband units 141, the plurality of baseband units 141 are connected in parallel with the remote radio unit 142. The remote radio unit 142 includes a digital intermediate frequency module 1421, a radio frequency analog module 1422, a power amplifier 1423, and a filter 1424.

It should be noted that, because content such as information exchange between the modules/units of the apparatus and the execution processes thereof is based on the same concept as method embodiments of this application, technical effects brought are the same as those of the method embodiments of this application. For specific content, refer to the descriptions in the foregoing method embodiments of this application. Details are not described herein again.

This application provides a computer-readable storage medium. The computer-readable storage medium may be any usable medium that can be stored by a computing device, or a data storage device such as a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium stores instructions. When the instructions are run on a computer, the computer is enabled to perform the peak clipping method in the foregoing embodiments or the optional embodiments.

This application further provides a computer program product. When the computer program product runs on a computer, the computer is enabled to perform the peak clipping method in the foregoing embodiments or the optional embodiments.

This application further provides a chip system. The chip system includes a processor and a memory that are coupled to each other. The memory is configured to store a computer program or instructions. The processing unit is configured to execute the computer program or the instructions stored in the memory, so that a network device performs the steps performed by the signal processing apparatus in the foregoing embodiments. Optionally, the memory is a memory, such as a register or a cache, in a chip. The memory may alternatively be a memory, such as a read-only memory (read-only memory, ROM), another type of static storage device that can store static information and instructions, or a random access memory (random access memory, RAM), that is located outside the chip and that is in a site. The processor mentioned anywhere above may be a general-purpose central processing unit, a microprocessor, an application-specific integrated circuit (application-specific integrated circuit, ASIC), or one or more integrated circuits configured to implement the foregoing peak clipping method.

In addition, it should be noted that the apparatus embodiments described above are merely an example. The units described as separate parts may or may not be physically separate, and parts displayed as units may or may not be physical units, may be located in one place, or may be distributed on a plurality of network units. A part or all of the modules may be selected based on actual needs to achieve the objectives of the solutions of embodiments. In addition, in the accompanying drawings of the apparatus embodiments provided in this application, connection relationships between modules indicate that the modules have communication connections with each other, and the communication connections may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by corresponding hardware. In addition, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technologies may be implemented in a form of a software product. The computer software product is stored in a readable storage medium, such as a floppy disk, a USB flash drive, a removable hard disk drive, a ROM, a RAM, a magnetic disk, or an optical disc of a computer, and includes several instructions for instructing a computer device (which may be a personal computer, a server, a network device, or the like) to perform the methods described in embodiments of this application.

A part or all of the foregoing embodiments may be implemented by software, hardware, firmware, or any combination thereof. When software is used to implement embodiments, a part or all of embodiments may be implemented in a form of a computer program product.

The computer program product includes one or more computer instructions. When the computer program instructions are loaded and executed on a computer, the procedures or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

## Claims

1. A peak clipping method, comprising:

    performing 1-out-of-N sampling on a first signal, wherein N is an integer greater than 1;
    selecting, from a second signal obtained through the sampling, a noise point set of the second signal based on a second threshold, wherein an amplitude of each noise point in the noise point set of the second signal is greater than the second threshold;
    determining a candidate noise point set of the first signal based on the noise point set of the second signal;
    selecting a noise point set of the first signal from the candidate noise point set of the first signal based on a first threshold, wherein an amplitude of each noise point in the noise point set of the first signal exceeds the first threshold;
    determining a peak clipping coefficient based on the noise point set of the first signal;
    clipping the first signal based on the peak clipping coefficient; and
    outputting a clipped first signal.

2. The method according to claim 1, wherein the determining a candidate noise point set of the first signal based on the noise point set of the second signal comprises:

    determining an expanded sample point set based on the noise point set of the second signal, wherein the expanded sample point set comprises the noise point set of the second signal and an adjacent sample point of each noise point in the second signal;
    determining first signal index values of M candidate noise points based on a second signal index value of each noise point;

determining the first signal index values of the M candidate noise points based on a second signal index value of each adjacent sample point, wherein M is a positive integer and M≤N; and

selecting the candidate noise point set of the first signal based on the first signal index values of the candidate noise points.

3. A peak clipping method, comprising:

selecting, from a first signal, a noise point set of the first signal, wherein an amplitude of each noise point in the noise point set of the first signal exceeds a first threshold;

determining an expanded sample point set based on the noise point set of the first signal, wherein the expanded sample point set comprises the noise point set of the first signal and an adjacent sample point of each noise point in the first signal;

performing upsampling based on the expanded sample point set;

selecting, from a sample point set obtained through the upsampling, a target noise point having an amplitude exceeding a second threshold;

determining a peak clipping coefficient based on the target noise point;

clipping the first signal based on the peak clipping coefficient; and

outputting a clipped first signal.

4. A peak clipping method, comprising:

selecting a first noise point set from a first channel signal based on a first threshold, wherein an amplitude of each noise point in the first noise point set exceeds the first threshold;

selecting a second noise point set from a second channel signal based on a second threshold, wherein an amplitude of each noise point in the second noise point set exceeds the second threshold;

selecting a first target sample point set from the second channel signal based on an index value of the first noise point set;

selecting a second target sample point set from the first channel signal based on an index value of the second noise point set;

generating a first candidate noise point set based on the first noise point set and the first target sample point set and generating a second candidate noise point set based on the second noise point set and the second target sample point set;

determining, from the first candidate noise point set and the second candidate noise point set, a combined signal noise point exceeding a third threshold;

determining a combined peak clipping coefficient based on the combined signal noise point;

determining a first peak clipping coefficient and a second peak clipping coefficient based on the combined peak clipping coefficient;

converting the first channel signal into a first peak suppression signal based on the first peak clipping coefficient;

converting the second channel signal into a second peak suppression signal based on the second peak clipping coefficient; and

outputting the first peak suppression signal and the second peak suppression signal.

5. The method according to claim 4, wherein the determining a first peak clipping coefficient and a second peak clipping coefficient based on the combined peak clipping coefficient comprises:

determining the first peak clipping coefficient based on the combined peak clipping coefficient, an average amplitude of the first channel signal, and a sum of the average amplitude of the first channel signal and an average amplitude of the second channel signal; and

determining the second peak clipping coefficient based on the combined peak clipping coefficient, the average amplitude of the second channel signal, and the sum of the average amplitude of the first channel signal and the average amplitude of the second channel signal.

6. The method according to claim 4 or 5, wherein

the converting the first channel signal into a first peak suppression signal based on the first peak clipping coefficient comprises:

generating a first noise signal based on the first peak clipping coefficient and a first noise base signal corresponding to the first channel signal; and
generating the first peak suppression signal based on the first noise signal and the first channel signal; and
the converting the second channel signal into a second peak suppression signal based on the second peak clipping coefficient comprises:

generating a second noise signal based on the second peak clipping coefficient and a second noise base signal corresponding to the second channel signal; and
generating the second peak suppression signal based on the second noise signal and the second channel signal.

7. A peak clipping method, comprising:

generating a frequency-shifted signal based on a first channel signal, wherein a difference between a modulation frequency of the frequency-shifted signal and a modulation frequency of the first channel signal is an integer multiple of a sampling bandwidth of the first channel signal;
generating a combined signal based on the frequency-shifted signal and a second channel signal;
determining a combined peak clipping coefficient based on a noise point set of the combined signal;
determining a first peak clipping coefficient and a second peak clipping coefficient based on the combined peak clipping coefficient;
converting the first channel signal into a first peak suppression signal based on the first peak clipping coefficient;
converting the second channel signal into a second peak suppression signal based on the second peak clipping coefficient; and
outputting the first peak suppression signal and the second peak suppression signal.

8. The method according to claim 7, wherein the determining a first peak clipping coefficient and a second peak clipping coefficient based on the combined peak clipping coefficient comprises:

determining the first peak clipping coefficient based on the combined peak clipping coefficient, an average amplitude of the first channel signal, and a sum of the average amplitude of the first channel signal and an average amplitude of the second channel signal; and
determining the second peak clipping coefficient based on the combined peak clipping coefficient, the average amplitude of the second channel signal, and the sum of the average amplitude of the first channel signal and the average amplitude of the second channel signal.

9. The method according to claim 7 or 8, wherein

the converting the first channel signal into a first peak suppression signal based on the first peak clipping coefficient comprises: generating a first noise signal based on the first peak clipping coefficient and a first noise base signal corresponding to the first channel signal; and generating the first peak suppression signal based on the first noise signal and the first channel signal; and
the converting the second channel signal into a second peak suppression signal based on the second peak clipping coefficient comprises: generating a second noise signal based on the second peak clipping coefficient and a second noise base signal corresponding to the second channel signal; and generating the second peak suppression signal based on the second noise signal and the second channel signal.

10. A signal processing apparatus, comprising:

a baseband unit, configured to: perform 1-out-of-N sampling on a first signal, wherein N is an integer greater than 1; select, from a second signal obtained through the sampling, a noise point set of the second signal based on a second threshold, wherein an amplitude of each noise point in the noise point set of the second signal is greater than the second threshold; determine a candidate noise point set of the first signal based on the noise point set of the second signal; select a noise point set of the first signal from the candidate noise point set of the first signal based on a first threshold, wherein an amplitude of each noise point in the noise point set of the first signal exceeds the first threshold; determine a peak clipping coefficient based on the noise point set of the first signal; and clip the first signal based on the peak clipping coefficient; and
a communication interface, configured to output a clipped first signal.

11. The signal processing apparatus according to claim 10, wherein

the baseband unit is specifically configured to: determine an expanded sample point set based on the noise point set of the second signal, wherein the expanded sample point set comprises the noise point set of the second signal and an adjacent sample point of each noise point in the second signal; determine first signal index values of M candidate noise points based on a second signal index value of each noise point; determine the first signal index values of the M candidate noise points based on a second signal index value of each adjacent sample point, wherein M is a positive integer and M≤N; and select the candidate noise point set of the first signal from the first signal based on the index values of the candidate noise points.

12. A signal processing apparatus, comprising:

a baseband unit, configured to: select, from a first signal, a noise point set of the first signal, wherein an amplitude of each noise point in the noise point set of the first signal exceeds a first threshold; determine an expanded sample point set based on the noise point set of the first signal, wherein the expanded sample point set comprises the noise point set of the first signal and an adjacent sample point of each noise point in the first signal; perform upsampling based on the expanded sample point set; select, from a sample point set obtained through the upsampling, a target noise point having an amplitude exceeding a second threshold; determine a peak clipping coefficient based on the target noise point; and clip the first signal based on the peak clipping coefficient; and
a communication interface, configured to output a clipped first signal.

13. A signal processing apparatus, comprising:

a first baseband unit, configured to select a first noise point set from a first channel signal based on a first threshold, wherein an amplitude of each noise point in the first noise point set exceeds the first threshold;
a second baseband unit, configured to select a second noise point set from a second channel signal based on a second threshold, wherein an amplitude of each noise point in the second noise point set exceeds the second threshold, wherein
the second baseband unit is further configured to select a first target sample point set from the second channel signal based on an index value of the first noise point set obtained by the first baseband unit; and
the first baseband unit is further configured to select a second target sample point set from the first channel signal based on an index value of the second noise point set obtained by the second baseband unit;
a combination unit, configured to: generate a first candidate noise point set based on the first target sample point set and the first noise point set; generate a second candidate noise point set based on the second target sample point set and the second noise point set; determine, from the first candidate noise point set and the second candidate noise point set, a combined signal noise point having an amplitude exceeding a third threshold; determine a combined peak clipping coefficient based on the combined signal noise point; determine a first peak clipping coefficient and a second peak clipping coefficient based on the combined peak clipping coefficient, wherein
the first baseband unit is further configured to convert the first channel signal into a first peak suppression signal based on the first peak clipping coefficient; and
the second baseband unit is further configured to convert the second channel signal into a second peak suppression signal based on the second peak clipping coefficient; and
a communication interface, configured to output the first peak suppression signal and the second peak suppression signal.

14. The signal processing apparatus according to claim 13, wherein the combination unit is specifically configured to: determine the first peak clipping coefficient based on the combined peak clipping coefficient, an average amplitude of the first channel signal, and a sum of the average amplitude of the first channel signal and an average amplitude of the second channel signal; and determine the second peak clipping coefficient based on the combined peak clipping coefficient, the average amplitude of the second channel signal, and the sum of the average amplitude of the first channel signal and the average amplitude of the second channel signal.

15. The signal processing apparatus according to claim 13 or 14, wherein

the first baseband unit is specifically configured to: generate a first noise signal based on the first peak clipping coefficient and a first noise base signal corresponding to the first channel signal; and combine the first noise signal and the first channel signal into the first peak suppression signal; and
the second baseband unit is specifically configured to: generate a second noise signal based on the second peak clipping coefficient and a second noise base signal corresponding to the second channel signal; and combine the second noise signal and the second channel signal into the second peak suppression signal.

16. A signal processing apparatus, comprising:

a second baseband unit, configured to: generate a frequency-shifted signal based on a first channel signal obtained by a first baseband unit, wherein a difference between a modulation frequency of the frequency-shifted signal and a modulation frequency of the first channel signal is an integer multiple of a sampling bandwidth of the first channel signal; generate a combined signal based on the frequency-shifted signal and a second channel signal; determine a combined peak clipping coefficient based on the combined signal; determine a first peak clipping coefficient and a second peak clipping coefficient based on the combined peak clipping coefficient; and convert the second channel signal into a second peak suppression signal based on the second peak clipping coefficient;

the first baseband unit, configured to convert the first channel signal into a first peak suppression signal based on the first peak clipping coefficient; and

a communication interface, configured to output the first peak suppression signal and the second peak suppression signal.

17. The signal processing apparatus according to claim 16, wherein the second baseband unit is specifically configured to: determine the first peak clipping coefficient based on the combined peak clipping coefficient, an average amplitude of the first channel signal, and a sum of the average amplitude of the first channel signal and an average amplitude of the second channel signal; and

determine the second peak clipping coefficient based on the combined peak clipping coefficient, the average amplitude of the second channel signal, and the sum of the average amplitude of the first channel signal and the average amplitude of the second channel signal.

18. The signal processing apparatus according to claim 16 or 17, wherein

the first baseband unit is specifically configured to: generate a first noise signal based on the first peak clipping coefficient and a first noise base signal corresponding to the first channel signal; and generate the first peak suppression signal based on the first noise signal and the first channel signal; and

the second baseband unit is specifically configured to: generate a second noise signal based on the second peak clipping coefficient and a second noise base signal corresponding to the second channel signal; and generate the second peak suppression signal based on the second noise signal and the second channel signal.

19. A network device, comprising: the signal processing apparatus according to any one of claims 10 to 18, and a remote radio unit comprising a radio frequency power amplifier.

20. A computer-readable storage medium, storing instructions, wherein when the instructions are run on a computer, the computer is enabled to perform the method according to any one of claims 1 to 9.

```
┌─────────────┐   ┌─────────────────────────┐   ┌─────────────┐
│             │   │   Remote radio unit     │   │             │
│             │   │         12              │   │             │
│ Baseband unit│──│  ┌──────────────────┐   │──│ Antenna unit│
│     11      │   │  │     Radio        │   │   │     13      │
│             │   │  │   frequency      │   │   │             │
│             │   │  │     power        │   │   │             │
│             │   │  │  amplifier 121   │   │   │             │
└─────────────┘   │  └──────────────────┘   │   └─────────────┘
                  └─────────────────────────┘
```

FIG. 1

```
┌──────────────────────────────────────────────┐  201
│       Perform 1:N sampling on a first signal  │──┐
└──────────────────────────────────────────────┘  ┘
                        │
                        ▼
┌──────────────────────────────────────────────┐  202
│ Select, from a second signal obtained through the │──┐
│ sampling, a noise point set of the second signal  │  ┘
│           based on a second threshold             │
└──────────────────────────────────────────────┘
                        │
                        ▼
┌──────────────────────────────────────────────┐  203
│ Determine a candidate noise point set of the first │──┐
│   signal based on the noise point set of the second │  ┘
│                     signal                          │
└──────────────────────────────────────────────┘
                        │
                        ▼
┌──────────────────────────────────────────────┐  204
│ Select a noise point set of the first signal from the │──┐
│  candidate noise point set based on a first threshold │  ┘
└──────────────────────────────────────────────┘
                        │
                        ▼
┌──────────────────────────────────────────────┐  205
│ Determine a peak clipping coefficient based on the │──┐
│          noise point set of the first signal        │  ┘
└──────────────────────────────────────────────┘
                        │
                        ▼
┌──────────────────────────────────────────────┐  206
│   Clip the first signal based on the peak clipping │──┐
│                   coefficient                       │  ┘
└──────────────────────────────────────────────┘
                        │
                        ▼
┌──────────────────────────────────────────────┐  207
│            Output a clipped first signal      │──┐
└──────────────────────────────────────────────┘  ┘
```

FIG. 2

FIG. 3

Select, from a first signal, a noise point set of the first signal — 401

Determine an expanded sample point set based on the noise point set of the first signal, where the expanded sample point set includes the noise point set of the first signal and an adjacent sample point of each noise point in the first signal — 402

Perform upsampling based on the expanded sample point set — 403

Select, from a sample point set obtained through the upsampling, a target noise point exceeding a second threshold — 404

Determine a peak clipping coefficient based on the target noise point — 405

Clip the first signal based on the peak clipping coefficient — 406

Output a clipped first signal — 407

FIG. 4

FIG. 5

Select a first noise point set from a first channel signal based on a first threshold — 601

Select a second noise point set from a second channel signal based on a second threshold — 602

Select a first target sample point set from the second channel signal based on an index value of the first noise point set — 603

Select a second target sample point set from the first channel signal based on an index value of the second noise point set — 604

Generate a first candidate noise point set based on the first noise point set and the first target sample point set — 605

Generate a second candidate noise point set based on the second noise point set and the second target sample point set — 606

Determine, from the first candidate noise point set and second candidate noise point set, a combined signal noise point exceeding a third threshold — 607

Determine a combined peak clipping coefficient based on the combined signal noise point — 608

Determine a first peak clipping coefficient and a second peak clipping coefficient based on the combined peak clipping coefficient — 609

Convert the first channel signal into a first peak suppression signal based on the first peak clipping coefficient — 610

Convert the second channel signal into a second peak suppression signal based on the second peak clipping coefficient — 611

Output the first peak suppression signal and the second peak suppression signal — 612

FIG. 6

First channel signal → First noise point set → First candidate noise point set → Combined signal noise point

First target sample point set

Second target sample point set

Second channel signal → Second noise point set → Second candidate noise point set

FIG. 7

Generate a frequency-shifted signal based on a first channel signal, where a difference between a modulation frequency of the frequency-shifted signal and a modulation frequency of the first channel signal is an integer multiple of a sampling bandwidth of the first channel signal — 801

Generate a combined signal based on the frequency-shifted signal and a second channel signal — 802

Determine a combined peak clipping coefficient based on a noise point set of the combined signal — 803

Determine a first peak clipping coefficient and a second peak clipping coefficient based on the combined peak clipping coefficient — 804

Convert the first channel signal into a first peak suppression signal based on the first peak clipping coefficient — 805

Convert the second channel signal into a second peak suppression signal based on the second peak clipping coefficient — 806

Output the first peak suppression signal and the second peak suppression signal — 807

FIG. 8

FIG. 9

FIG. 10

1100

First baseband
unit
1101

Combination
unit
1103

Second
baseband unit
1102

Communication
interface
1104

Signal processing apparatus

FIG. 11

1200

First baseband
unit
1201

Second
baseband unit
1202

Communication
interface
1203

Signal processing apparatus

FIG. 12

130

131                                    132

Signal
processing              Remote radio unit
apparatus
                              1321
                    Radio
                    frequency
                    power
                    amplifier

Network device

FIG. 13

FIG. 14

EP 4 510 513 A1

## INTERNATIONAL SEARCH REPORT

| International application No. |
| --- |
| **PCT/CN2023/088855** |

**A. CLASSIFICATION OF SUBJECT MATTER**

H04L27/26(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXT, CNKI: 功放, 峰均比, 削峰, 门限, 噪声, 集合, 采样, 扩展, 移频, 合路, 系数, PA, PAPR, reduce, peak, threshold, noise, group, sample, extend, shift, frequency, merge

**C. DOCUMENTS CONSIDERED TO BE RELEVANT**

| Category* | Citation of document, with indication, where appropriate, of the relevant passages | Relevant to claim No. |
| --- | --- | --- |
| A | CN 101442348 A (HUAWEI TECHNOLOGIES CO., LTD.) 27 May 2009 (2009-05-27) description, pages 1-2 | 1-20 |
| A | CN 102111372 A (CENTRON COMMUNICATIONS CO., LTD.) 29 June 2011 (2011-06-29) entire document | 1-20 |
| A | CN 101018071 A (DATANG MOBILE COMMUNICATIONS EQUIPMENT CO., LTD.) 15 August 2007 (2007-08-15) entire document | 1-20 |
| A | US 2018359126 A1 (TELEFONAKTIEBOLAGET LM ERICSSON (PUBL)) 13 December 2018 (2018-12-13) entire document | 1-20 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2023** | **21 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
Information on patent family members

</div>

International application No.

**PCT/CN2023/088855**

| Patent document cited in search report | | | Publication date (day/month/year) | Patent family member(s) | | | Publication date (day/month/year) |
|---|---|---|---|---|---|---|---|
| CN | 101442348 | A | 27 May 2009 | WO | 2010072127 | A1 | 01 July 2010 |
| CN | 102111372 | A | 29 June 2011 | None | | | |
| CN | 101018071 | A | 15 August 2007 | None | | | |
| US | 2018359126 | A1 | 13 December 2018 | WO | 2018137175 | A1 | 02 August 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210469011